# EUROPÄISCHE PATENTSCHRIFT

(11) **EP 2 498 967 B1**
(45) Veröffentlichungstag und Bekanntmachung des Hinweises auf die Patenterteilung: **06.05.2015**
(21) Anmeldenummer: 10810912.5
(22) Anmeldetag: 10.11.2010
(51) Int. Cl.: B29C 33/04, B29C 33/00, B29C 44/44, B29C 44/58, B29C 44/34, B29K 25/00

(54) **VORRICHTUNG ZUR HERSTELLUNG VON FORMTEILEN AUS PARTIKELSCHÄUMEN**
DEVICE FOR PRODUCING MOLDED PARTS FROM PARTICLE FOAMS
DISPOSITIF DE PRODUCTION DE PIÈCES MOULÉES À PARTIR DE MOUSSES DE PARTICULES

(30) Priorität: 13.11.2009 DE 102009053272
(43) Veröffentlichungstag der Anmeldung: 19.09.2012
(73) Patentinhaber: SSW PearlFoam GmbH, 99885 Ohrdruf (DE)
(72) Erfinder: BRUNING, Jürgen, 98553 Ohrdruf (DE)
(74) Vertreter: Liedtke, Markus
(86) Internationale Anmeldenummer: PCT/EP2010/067236
(87) Internationale Veröffentlichungsnummer: WO 2011/058071

(56) Entgegenhaltungen:
- DE-A1- 2 024 262
- DE-A1- 19 637 349
- DE-U1-202007 006 164
- GB-A- 1 547 016
- GB-A- 1 563 324
- US-A- 4 557 881
- US-A- 5 858 288

## Beschreibung

Die Erfindung betrifft eine Vorrichtung zur Herstellung von Formteilen. Die Vorrichtung umfasst ein Formwerkzeug mit mindestens zwei Kavitäten, die mit aus einem thermoplastischen Material gebildeten Schaumpartikeln füllbar sind, wobei die gefüllten Kavitäten mit unter Druck stehendem, heißem Wasserdampf beaufschlagbar sind, um eine Expansion der Schaumpartikel zu bewirken, die Schaumpartikel zu erweichen und miteinander thermoplastisch zu verschweißen und eine thermoplastische Oberfläche des jeweils aus den verschweißten Schaumpartikeln gebildeten Formteils an einer Wandung der Kavität auszubilden.

Formteilautomaten zur Herstellung von Partikelschaumformteilen sind gewöhnlich mit einer Dampfkammer ausgerüstet, in die über Stellventile Wasserdampf zugeführt wird. In der Dampfkammer ist ein Formwerkzeug mit einer Kavität angeordnet, die mit Schaumpartikeln, beispielsweise in Form kleiner Kügelchen, gefüllt wird. Der Wasserdampf fließt über Dampfdüsen durch die Kavität und führt zu einer Verschweißung der darin befindlichen Schaumstoffpartikel. Üblicherweise werden so Schaumstoffformteile aus expandiertem Polypropylen (EPP) und expandiertem Polystyrol (EPS) hergestellt.

Ein derartiger Aufbau bietet die Möglichkeit, im Rahmen einer gestaffelten Maschinengröße unterschiedliche Formwerkzeuge mittels eines Aufspannrahmens in der Dampfkammer zu befestigen. Zum Einsatz kommen gefräste oder gegossene Formwerkzeuge.

Der überwiegende Teil der in Form von Wasserdampf eingesetzten Energie beim Formteilprozess wird zum zyklischen Aufheizen des Werkzeuges und der umgebenden Dampfkammer benötigt und nach jedem Verschweißungsvorgang durch Kühlung abgeführt. Geringere Anteile gehen als Spül- und Übertragungsverluste oder Abstrahlung verloren.

Zur Reduzierung des erheblichen Energieaufwandes zur Bereitstellung des Heißdampfes wurden bereits verschiedene Ansätze verfolgt, beispielsweise die Anordnung einer Wärme isolierenden Auskleidung in der Dampfkammer. In der EP 0 666 796 ist eine Wärme isolierende Auskleidung der Werkzeuge offenbart. Nachteilig ist hierbei insbesondere die deutlich verschlechterte Wärmeleitung bei der Kühlung des Formteils, vor allem aber die Beschränkung des Einsatzbereiches auf expandiertes Polystryrol. Die Beschichtung des Werkzeuges entspricht nicht den Anforderungen der höheren Schweißdrücke und -temperaturen, die bei der Verarbeitung von EPP gefordert werden. EPS wird bei Temperaturen um 110 °C und bei Drücken um 1,5 bar verarbeitet, während EPP entsprechend dem höheren Schmelzpunkt bei ca. 160 °C und bei bis zu 7,5 bar verarbeitet wird. Die im Einsatz befindliche Technik verwendet zumeist den beschriebenen Werkzeugaufbau innerhalb einer Dampfkammer. Die Formwerkzeuge müssen dabei auf die Dampfkammerabmessungen angepasst sein.

Während der Energieeinsatz durch die Isolation des Werkzeuges verringert ist, geht die Dampfkammermasse selbst weiterhin in die Wärmebilanz ein. Der in EP 0 666 796 beschriebene Prozess weist jedoch auch auf die Möglichkeit der direkten Dampfzuführung zum Werkzeug hin. Hierbei ist das Werkzeug als konventionelles Werkzeug mit einer Innenbeschichtung aufgebaut. Die Dampfverteilung erfolgt in einem weiteren, vorgeschalteten Dampfverteiler. Der Dampfkammerrahmen ist dabei weithin limitierend für die möglichen Werkzeugabmessungen. Der Dampfverbrauch kann durch die erhöhte Anzahl der Dampfleitungen ebenfalls nicht maßgeblich gesenkt werden. Weiterhin ist eine homogene Durchflutung des Werkzeuges mit Wasserdampf nicht sichergestellt. Eine Kühlung mittels Wasserstrahlkühlung ist bei diesem System nicht mehr möglich. Eine dort beschriebene Kühlung mittels Vakuum ist nur mit EPS möglich. Die erhöhten Kühl- bzw. Stäbilisierzeiten erhöhen die gesamte Taktzeit. Weiterhin ist bei EPP neben der zu hohen mechanischen Belastung beim Bedampfen eine ausschließliche Kühlung mittels Vakuum durch die geringe Restfeuchte (bezogen auf die gesamt notwendige Temperaturdifferenz von 160 °C auf ca. 70 °C) nicht möglich.

Für den EPS-Bereich werden insbesondere durch die Firmen Hirsch und Kurtz Maschinen nach dem so genannten Transferverfahren angeboten, bei denen Verschweißung und Kühlung der Formteile in jeweils unterschiedlichen Werkzeugen erfolgen. Hierbei werden die Formteile während des Prozesses automatisiert vom Verschweiß- in das Stabilisierwerkzeug übergeben. Das jeweilige Werkzeug mit zugehöriger Dampfkammer inuss dabei nicht den gesamten Temperaturwechsel zwischen Verschweißungs- und Entformtemperatur mitmachen, sondern bleibt annähernd auf konstanter Temperatur.

Dieses Verfahren ist ebenfalls auf EPS beschränkt, da andere Partikelschäume nach der Bedampfung bzw. -verschweißung einen hohen Partikelinnendruck, den so genannten Schaumdruck, aufweisen, der beim zwangsläufigen Öffnen der Form vor der Kühlung zum Aufplatzen des Formteils und der interpartikulären Schweißverbindungen führt.

Aus der DE 10 2004 004 657 A1 ist ein Formteilautomat bekannt, bei dem die Medienverteilung ausschließlich werkzeugseitig erfolgt.

Sämtlichen technischen Ausführungen zur Reduzierung des Energiebedarfes ist gemein, dass diese nur unzureichend den Wirkungsgrad des Formteilprozesses senken. In allen Fällen wird aufgrund des erheblichen Dampfbedarfes bzw. der hohen Dampfentnahmemenge bei nahezu konstantem Druck eine separate, ausreichend große Dampferzeugungseinheit benötigt. Aufgrund der hohen Investitionskosten für einen derartigen Dampferzeuger und -speicher ist eine Formteilfertigung meist nur bei spezialisierten Formteilschäumern mit mehreren Formteilautomaten vorzufinden.

Aus der CH 541 410 A ist eine Formmaschine zur Herstellung von Formteilen aus expandierbarem Polystyrol mit mindestens einem zwischen zwei Formrahmen liegenden Etagenformrahmen bekannt, so dass zwischen dem Etagenformrahmen und jedem seitlichen Formrahmen jeweils eine Kavität zur Herstellung der Formteile ausgebildet ist. Der Etagenformrahmen kann stationär mit beweglichen seitlichen Formrahmen ausgebildet sein.

Aus der DE 1 504 589 ist eine Formmaschine zur Verarbeitung von thermoplastischem, expandierbarem Kunststoff mit mindestens einem zwischen zwei äußeren Formrahmen liegenden mittleren Formrahmen bekannt, so dass zwischen dem mittleren Formrahmen und jedem äußeren Formrahmen jeweils eine Kavität zur Herstellung der Formteile ausgebildet ist. Der mittlere Formrahmen kann stationär mit beweglichen seitlichen Formrahmen ausgebildet sein.

Aus der DE 202 13 687 U1 ist ein Formteilautomat zum Herstellen von Formteilen aus Partikelschaum mit einer zweigeteilten Form bekannt, wobei die eine Seite der Form fest mit dem Rahmen des Formteilautomaten verbunden ist, die andere Formhälfte mit ihrer zugehörigen Dampfkammer zum Öffnen und Schließen der Form horizontal verfahren werden kann und die beiden Formhälften im geschlossenen Zustand verriegelt werden können, wobei die verfahrbare Formhälfte mit nur einem einzigen Antrieb eine Linearbewegung und eine Schwenkbewegung ausführen kann.

Aus der US 4,557,881 ist eine Maschine zum Formen von Platten aus geschäumtem Material bekannt, umfassend einen aufrecht stehenden stationären Dampfkasten mit einander gegenüberliegenden perforierten Außenflächen sowie ein Paar beweglicher Anordnungen, die an die einander gegenüberliegenden Flächen des Dampfkastens anschlagbar sind, um somit Formhohlräume zu definieren. Jede Hohlraum-Bildungs-Anordnung beinhaltet einen Formrahmen, der sich in Normalrichtung zu einer Fläche des Dampfkastens erstreckt und einen darin angeordneten Formenträger, der mit dem Formrahmen gekoppelt ist. Spindelschrauben bewegen jeden Formrahmen in und aus dem Anschlag mit dem Dampfkasten und bewegen auch jeden Formenträger relativ zu seinem jeweiligen Formenträger auf den Dampfkasten zu und davon weg. In einem Verfahren zum Formen von Platten aus geschäumtem Material werden erhitzte Polystyren-Beads durch die beweglichen Formenträger auf eine vorgegebene Dicke gepresst um eine Platte mit den gewünschten Abmessungen und der gewünschten Dichte zu erhalten.

Der Erfindung liegt daher die Aufgabe zugrunde, eine verbesserte Vorrichtung zur Herstellung von Formteilen anzugeben.

Die Aufgabe wird erfindungsgemäß gelöst durch eine Vorrichtung mit den Merkmalen des Anspruchs 1.

Vorteilhafte Ausgestaltungen der Erfindung sind Gegenstand der Unteransprüche.

Erfindungsgemäß umfasst eine Vorrichtung zur Herstellung von Formteilen ein Formwerkzeug mit mindestens zwei Kavitäten, die mit aus einem thermoplastischen Material gebildeten Schaumpartikeln füllbar sind. Die gefüllten Kavitäten sind mit unter Druck stehendem, heißem Wasserdampf beaufschlagbar, um eine Expansion der Schaumpartikel zu bewirken, die Schaumpartikel zu erweichen und miteinander thermoplastisch zu verschweißen und eine thermoplastische Oberfläche des jeweils aus den verschweißten Schaumpartikeln gebildeten Formteils an einer Wandung der Kavität auszubilden. Es ist mindestens eine Dampfzuleitung zur Versorgung des Formwerkzeuges mit Dampf vorgesehen. Das erfindungsgemäße Formwerkzeug umfasst ein feststehendes Mittelteil, das zwischen zwei in Richtung des Mittelteils zwischen einem offenen und einem geschlossenen Zustand und umgekehrt beweglichen Seitenteilen angeordnet ist, so dass bei geschlossenem Zustand die Kavitäten zwischen jeweils einem der Seitenteile und dem Mittelteil ausgebildet sind. Im Falle von zwei Kavitäten werden also eine Kavität zwischen einem der Seitenteile und dem Mittelteil und die andere Kavität zwischen dem Mittelteil und dem anderen Seitenteil gebildet.

Die erfindungsgemäße Vorrichtung erlaubt die Herstellung von mindestens zwei Formteilen gleichzeitig entsprechend der Anzahl der vorgesehenen Kavitäten. Es können zwischen dem Mittelteil und jedem der Seitenteile auch mehrere Kavitäten nebeneinander liegend angeordnet sein, so dass mehr als zwei Formteile gleichzeitig hergestellt werden können.

Das Schließen und insbesondere das geschlossene Halten des Formwerkzeuges gegen den beim Expandieren auftretenden Druck des Dampfes erfordern erhebliche Kräfte. Bei einer herkömmlichen Vorrichtung ist meist eine Hälfte des Formwerkzeuges fest mit einem Rahmen oder Chassis verbunden, während die andere Hälfte beweglich ist. Die erwähnten hohen Kräfte treten also zwischen dem Rahmen und einem Teil des Formwerkzeuges auf und erfordern daher, dass der Rahmen sehr massiv ausgeführt ist und dass die Hälften des Formwerkzeuges auf massiven Holmen geführt werden. Bei der erfindungsgemäßen Vorrichtung treten hohe Kräfte nur zwischen den beiden beweglichen Seitenteilen auf, insbesondere wenn die beiden Seitenteile synchron zueinander mit einem gemeinsamen Antrieb in Richtung des Mittelteils und entgegengesetzt bewegt werden. Ein gegebenenfalls vorgesehener Rahmen der Vorrichtung ist dabei praktisch kraftfrei. Daher ist eine massive Ausführung des Rahmens nicht erforderlich. Dementsprechend ist die erfindungsgemäße Vorrichtung leichter, benötigt weniger Material und Raum und kann entsprechend preisgünstig gefertigt werden. Außerdem weist die erfindungsgemäße Vorrichtung bezogen auf ihren Flächenbedarf eine erheblich größere Nutzfläche auf als herkömmliche Vorrichtungen,

Während bei herkömmlichen Vorrichtungen durch die Notwendigkeit massiver Holme zur Führung der Teile des Formwerkzeuges aufgrund hoher Kräfte hydraulische Antriebe zum Verschieben der Teile des Formwerkzeuges erforderlich sind, erlaubt die erfindungsgemäße Vorrichtung wegen des oben erläuterten, möglichen Verzichts auf solche Holme auch den Einsatz eines Elektroantriebs für vergleichsweise geringe Kräfte. Der Vorschub der Seitenteile mittels Elektroantrieb und geringen Kräften verringert erheblich das Risiko der Beschädigung des Formwerkzeuges für den Fall des Verkantens, wohingegen dieses Risiko bei Verwendung massiver Holme und einem hydraulischen Antrieb, wie aus dem Stand der Technik bekannt, relativ hoch ist.

Die erfindungsgemäße Vorrichtung ist auch energetisch günstiger als herkömmliche Vorrichtungen, da im Verhältnis zur Nutzfläche, das heißt der Fläche der erzeugten Formkörper, die Außenfläche des Formwerkzeuges mit Mittelteil und zwei Seitenteilen kleiner ist als bei zwei Werkzeughälften. Demzufolge treten geringere Wärmeverluste durch Abstrahlung auf.

Erfindungsgemäß wird der Dampf ausschließlich dem starren Mittelteil und nicht den Seitenteilen zugeführt und vom Mittelteil aus den Kavitäten zugeführt. Auf diese Weise kann der Dampf ohne Einsatz von Gelenken und in starren Rohren anstatt in flexiblen Schläuchen geführt werden. Dies erhöht signifikant die Sicherheit der Vorrichtung hinsichtlich der Gefahr des Berstens von Dampfleitungen. Wärmeverluste aus der Dampfleitung fallen ebenfalls geringer aus als bei Schläuchen, da eine starre Dampfleitung besonders kurz ausgeführt sein kann, während eine bewegliche Dampfleitung hinreichend lang sein muss, um die ungehinderte Bewegung des angeschlossenen Teils des Formwerkzeuges zu ermöglichen.

Auch andere Medien wie Druckluft oder Vakuum werden vorzugsweise nur dem Mittelteil und nicht den Seitenteilen zugeführt, so dass auf flexible Leitungen und Gelenke verzichtet werden kann.

Vorzugsweise sind die Seitenteile bezüglich des Mittelteils synchron und mittels desselben Antriebs bewegbar.

Alternativ oder zusätzlich zum elektrischen Antrieb der Seitenteile kann ein hydraulischer Antrieb zum Bewegen der Seitenteile vorgesehen sein.

Insbesondere sind die Seitenteile einen überwiegenden Teil einer Wegstrecke vom geöffneten Zustand zum geschlossenen Zustand mittels des elektrischen Antriebs bewegbar und eine geringe restliche Wegstrecke mittels des hydraulischen Antriebs bewegbar. Auf diese Weise kann der überwiegende Teil zügig und mit vergleichsweise geringer Kraft bewältigt werden, ohne dass die Gefahr der Beschädigung des Werkzeuges beim Verkanten besteht. Die verbleibende Reststrecke wird dann mit hoher Kraft durch den hydraulischen Antrieb bewältigt, um das Formwerkzeug gegen den Druck des Dampfes geschlossen und dicht zu halten. Beim Öffnen des Formwerkzeuges nach Herstellung des Formkörpers kann zunächst eine geringe Strecke mit dem hydraulischen Antrieb gefahren werden, beispielsweise, um mögliche Verklebungen des Formkörpers mit der Wandung der Kavität zu lösen. Anschließend erfolgt das Fahren des verbleibenden größeren Teils der Strecke mittels des elektrischen Antriebs und geringer Kraft.

Die Kavitäten können zur Herstellung gleichartiger oder verschiedenartiger Formteile ausgebildet sein, das heißt, es können gleichzeitig zwei gleiche oder zwei unterschiedliche Formteile hergestellt werden.

Insbesondere können die Kavitäten zur Herstellung verschiedenartiger, jedoch zusammengehöriger Formteile ausgebildet sein, beispielsweise solcher Formteile, die paarweise verwendet werden oder zueinander komplementär gebildet sind, um gemeinsam einen Behälter zu bilden. Die gleichzeitige, paarweise Herstellung erleichtert die Zuordnung der Teile zueinander.

Die Seitenteile werden in ihrer Bewegung vorzugsweise in und/oder auf Rollschienen geführt. Rollschienen erlauben eine besonders reibungsarme Führung und ermöglichen geringe Antriebskräfte. Die Seitenteile können hierzu in den Rollschienen eingehängt sein.

Zur Herstellung eines Formteils werden die Seitenteile aus dem offenen Zustand in den geschlossenen Zustand bewegt und die Kavitäten des Formwerkzeuges mit aus einem thermoplastischen Material gebildeten Schaumpartikeln gefüllt. Die gefüllten Kavitäten werden mit unter Druck stehendem heißen Wasserdampf beaufschlagt, um eine Expansion der Schaumpartikel zu bewirken, eine Thermoplastizität einer Oberfläche der Schaumpartikel zu bewirken, die Schaumpartikel durch Expansionsdruck miteinander thermoplastisch zu verschweißen sowie eine thermoplastische Oberfläche des aus den verschweißten Schaumpartikeln gebildeten Formteils an einer Wandung der Kavität auszubilden.

Thermoplastizität ist ein weicher, klebriger Zustand, den einige Stoffe beim Überschreiten einer Erweichungstemperatur erreichen. Die Beaufschlagung mit Wasserdampf wird über mindestens ein Ventil zeitgesteuert, insbesondere bei einem ungeregelten Maximaldruck mindestens einmal so durchgeführt, dass der Wasserdampf als weitgehend unkondensierter, trockener Wasserdampf innerhalb einer kurzen Bedampfungszeit eine Mehrzahl der Partikel erreicht, bevor sich die thermoplastische Oberfläche des Formteils ausbildet. Mit trockenem Wasserdampf ist solcher Wasserdampf gemeint, der nur wenig oder kein Kondensat enthält und zu einem großen Teil aus gasförmigem Wasser besteht. Den Partikeln wird Energie aus dem Wasserdampf so schnell zugeführt, dass die Partikel zuerst oberflächlich thermoplastisch werden und erst anschließend expandieren. Um den Wasserdampf als weitgehend unkondensierten, trockenen Wasserdampf zuzuführen, muss eine Zuleitung zwischen dem Ventil und der Kavität möglichst kurz sein, damit keine Kondensation des Dampfes eintritt. Diese Zuleitung kürzer als 500 mm. Die Zuführung des Drucks erfolgt ungeregelt über einen kurzen Bedampfungszeitraum statt druckgeregelt, wie aus dem Stand der Technik bekannt. Während bei geregeltem Druck durch intervallartiges Öffnen und Schließen des Ventils die Druckverhältnisse in der Zuleitung ein orts- und zeitabhängiges Kondensieren und wieder Verdampfen im Wasserdampf bewirken und damit Energie aus dem Wasserdampf entweicht, wird bei schnellem Energieeintrag in die Schaumpartikel, wie im vorliegenden Verfahren, ein wesentlich größerer Anteil der Energie zur Bildung des Formteils verwendet. Das bedeutet, dass weniger Energie als Abwärme frei wird, so dass die Herstellungskosten durch geringeren Dampfverbrauch pro Formteil drastisch sinken. Durch die nur kurzzeitige Beaufschlagung der Kavität mit Wasserdampf erwärmt sich auch das Formwerkzeug nicht in dem Maße wie bei Bedampfung mit geregeltem Druck über einen längeren Zeitraum. Damit verkürzt sich eine Zykluszeit für die Herstellung des Formteils nicht nur durch die kürzere Bedampfungszeit selbst, sondern auch durch die kürzere Zeit, die zum anschließenden Herunterkühlen des Formwerkzeuges erforderlich ist. Eine für das Tempern des Formteils erforderliche Zeit verkürzt sich ebenfalls. Beim Tempern wird durch Kühlen und Stabilisieren ein Innendruck in den Schaumpartikeln abgebaut. Durch das Abkühlen einer in den Schaumpartikeln enthaltenen Flüssigkeit entsteht ein leichtes Vakuum. Da durch die Verwendung von trockenem Wasserdampf weniger Feuchtigkeit in den Schaumpartikel enthalten ist, kann die Zeit für das Tempern verkürzt werden, ohne dass der Formkörper zu sehr schrumpft. Der weitgehend trockene Wasserdampf an den Schaumpartikeln bewirkt, dass die Energie weniger schnell in das Innere der Schaumpartikel vordringt, wodurch die Schaumpartikel zunächst an der Oberfläche thermoplastisch werden und erst anschließend expandieren. Dadurch wird vermieden, dass bei zu früher Expansion der Wasserdampf nicht zu allen Schaumpartikeln gelangt.

Die Zuführung des Dampfes erfolgt insbesondere so kurzzeitig, dass das thermoplastische Material der Schaumpartikel nicht durch Überhitzung zerstört wird.

Vorzugsweise werden Schaumpartikel aus expandierbarem Polystyrol (EPS) und/oder aus expandierbarem Polypropylen (EPP) und/oder aus expandierbarem Polyethylen (EPE) und/oder aus einem anderen expandierbaren Polyolefin verwendet. Weiter können Schaumpartikel aus mindestens einem bioplastischen Material, insbesondere Stärke, Maisstärke oder anderen nachwachsenden Rohstoffen oder thermoelastisch beschichtete Materialien verwendet werden.

Es können auch Gemische mehrerer der genannten Stoffe verwendet werden. EPP weist eine höhere Expansionsgeschwindigkeit auf als EPS. Der vergleichsweise hohe Druck des Dampfes bewirkt, dass die EPP-Partikel nicht zu sehr expandieren, wenn ihre Oberfläche thermoplastisch ist.

Der für die Bedampfung verwendete Maximaldruck liegt vorzugsweise in einem Bereich von 5 bar bis 10 bar, insbesondere bei etwa 7 bar, und entspricht dem ungeregelten Vordruck aus einer Vorrichtung für die Erzeugung des Dampfes. Somit entfällt anderenfalls erforderlicher Aufwand für die Druckreduzierung.

Die Bedampfungszeit liegt vorzugsweise zwischen 0,2 s und 3 s, insbesondere bei etwa 1,5 s.

Die Schaumpartikel werden bevorzugt mehrmals von verschiedenen Seiten bedampft (Querbedampfung). Dies hat den Vorteil, dass im Wesentlichen alle Schaumpartikel vom Wasserdampf erreicht werden auch wenn sich auf einer der Seiten bereits eine thermoplastische Oberfläche ausgebildet hat und das Einströmen von Wasserdampf von dieser Seite entsprechend behindert wird. Hierzu können mehrere Dampfzuleitungen mit entsprechenden Ventilen vorgesehen sein.

Vorzugsweise werden die Kavitäten und/oder die zur Bedampfung vorgesehenen Dampfzuleitungen mittels Druckluft gespült, um Kondensat zu entfernen. Da die Ausbildung von Kondensat sich nicht vollständig verhindern lässt, sollen die Dampfzuleitungen und/oder die Kavität beispielsweise nach der Bedampfung mit Druckluft gespült, das heißt getrocknet, werden, damit die Vorteile des Verfahrens auch in einem nachfolgenden Zyklus bestehen bleiben.

Insbesondere werden mit einem Treibmittel versehene Schaumpartikel verwendet. Beispielsweise wird bei Verwendung von EPS Pentan als Treibmittel verwendet. Dieses dehnt sich beim Erwärmen aus und sorgt für die Expansion des durch die Erwärmung erweichten thermoplastischen Materials. Zumindest ein Teil des Treibmittels wird dabei vom Wasserdampf aufgenommen.

Das Einbringen der Schaumpartikel in die Kavität erfolgt vorzugsweise mittels Einblasen, insbesondere unter Druck, so, dass die Schaumpartikel komprimiert werden. Durch die Vorkompression wird ein Expansionsgrad der Schaumpartikel bei späterer Beaufschlagung mit Wasserdampf erhöht. Ebenso können die Schaumpartikel eingeschüttet werden.

Das Formwerkzeug kann mit einer Wärmeisolierung versehen sein, so dass ein Wärmeübergang vom Wasserdampf auf das Formteil und auf die Kavität konzentriert und auf eine Umgebung verringert wird. Auf diese Weise werden der Energiebedarf und der Dampfverbrauch weiter reduziert.

Das Formwerkzeug ist erfindungsgemäß so ausgebildet, dass die Schaumpartikel von verschiedenen Seiten bedampfbar sind.

Erfindungsgemäß sind mehrere Ventile sowie Dampfkanäle innerhalb des Mittelteils und der Seitenteile so vorgesehen, dass Dampf im geschlossenen Zustand vom Mittelteil aus in die Dampfkanäle der Seitenteile und von dort aus in die jeweilige Kavität strömbar ist.

Weiter kann eine zwischen dem Ventil und dem Formwerkzeug angeordnete Dampfleitung an einer Innenseite wärmeisoliert sein, insbesondere dann, wenn das Ventil zu weit vom Formwerkzeug entfernt ist, um auf andere Weise sicherzustellen, dass der Wasserdampf als trockener Wasserdampf in die Kavität gelangt.

Der Wasserdampf kann dem Formwerkzeug direkt zugeführt werden. Alternativ kann das Formwerkzeug in einer Dampfkammer angeordnet sein. Die Dampfkammer ist vorzugsweise möglichst klein im Verhältnis zur Größe der Kavität, um den Wasserdampf am Kondensieren zu hindern und die Energieverluste gering zu halten.

Das Formwerkzeug wird nach der Bedampfung bevorzugt mit Wasser gekühlt.

Nach der Bedampfung kann eine Kühlung des Formteils mit Vakuum durchgeführt werden. Dabei wird noch vorhandenes Kondensat verdunstet und dessen Verdunstungskälte zum Kühlen des Formwerkzeuges genutzt.

Ausführungsbeispiele der Erfindung werden im Folgenden anhand von Zeichnungen näher erläutert.

Darin zeigen:
- Figur 1: ein Dampfzustandsdiagramm zur Veranschaulichung des Begriffs "trockener Dampf", und
- Figur 2: eine schematische Seitenansicht einer Vorrichtung zur Herstellung von Form teilen.

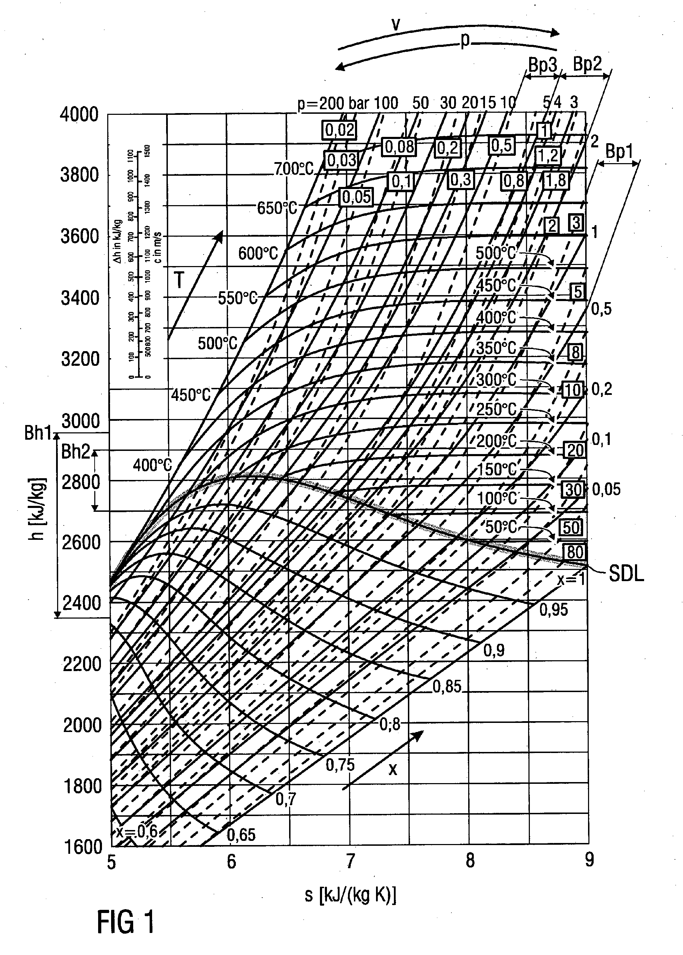

Figur 1 stellt ein Dampfzustandsdiagramm (Mollier-(h, s)-Diagramm) dar. Auf der Abszisse ist die Entropie s des Dampfes mit der Einheit kJ/(kg*K) und auf der Ordinate die zugehörige Enthalpie h mit der Einheit kJ/kg aufgetragen. Weiter sind der Druck p in bar, die Temperatur T in °C und das spezifische Volumen v in m³/kg angegeben. Isobare, das heißt Linien gleichen Drucks p, verlaufen im Wesentlichen diagonal von links unten nach rechts oben und sind durchgehend dargestellt. Isochore, das heißt Linien gleichen spezifischen Volumens v, verlaufen ähnlich wie die Isobaren und sind gestrichelt dargestellt. Die Wertangeben des spezifischen Volumens sind zur Unterscheidung gerahmt dargestellt. In dem Dampfzustandsdiagramm ist eine so genannte Sattdampflinie SDL eingezeichnet. Ab der Sattdampflinie SDL und darüber ist der Dampf trocken bis überhitzt. Unterhalb der Sattdampflinie SDL spricht man von Nassdampf. Nassdampf enthält einen Anteil x Dampf (dargestellt ist der Bereich von etwa 0,57 bis 1) und einen verbleibenden Anteil Wasser, der sich mit x zur Summe 1 ergänzt. Beispielsweise enthält Nassdampf mit x=0,95 95% Dampf und 5% Wasser. Die Sattdampflinie SDL markiert den Wert x=1. Ab der Sattdampflinie SDL ist kein kondensiertes Wasser mehr im Dampf enthalten. Isotherme, das heißt Linien gleicher Temperatur T sind beginnend auf der Sattdampflinie SDL im Wesentlichen waagerecht verlaufend dargestellt. Um die Bedampfung der Schaumpartikel mit trockenem Dampf sicherzustellen, werden die Parameter Druck p und Temperatur T vorzugsweise so geführt, dass der Dampfzustand oberhalb der Sattdampflinie SDL liegt. Vorzugsweise liegt die Enthalpie dabei in einem Enthalpiebereich Bh1 von 2370 kJ/kg bis 2980 kJ/kg, besonders bevorzugt in einem Enthalpiebereich Bh2 von 2700 kJ/kg bis 2900 kJ/kg.

Für die Expansion von Schaumpartikeln 6 aus EPS wird vorzugsweise ein Druck p in einem Druckbereich Bp1 von etwa 0,5 bar bis 1,5 bar gewählt.

Für die Expansion von Schaumpartikeln 6 aus EPP wird bei Autoklavmaterial vorzugsweise ein Druck p in einem Druckbereich Bp2 von etwa 2 bar bis 5 bar und bei Extrusionsmaterial in einem Druckbereich Bp3 von etwa 5 bar bis 8 bar gewählt.

In Figur 1 ist weiter ein Zusammenhang zwischen einer Strömungsgeschwindigkeit c des Dampfes und einer Enthalpiedifferenz Δ*h* des Dampfes dargestellt. Angestrebt wird eine möglichst hohe Strömungsgeschwindigkeit c und damit eine entsprechend hohe Enthalpiedifferenz Δ*h.*

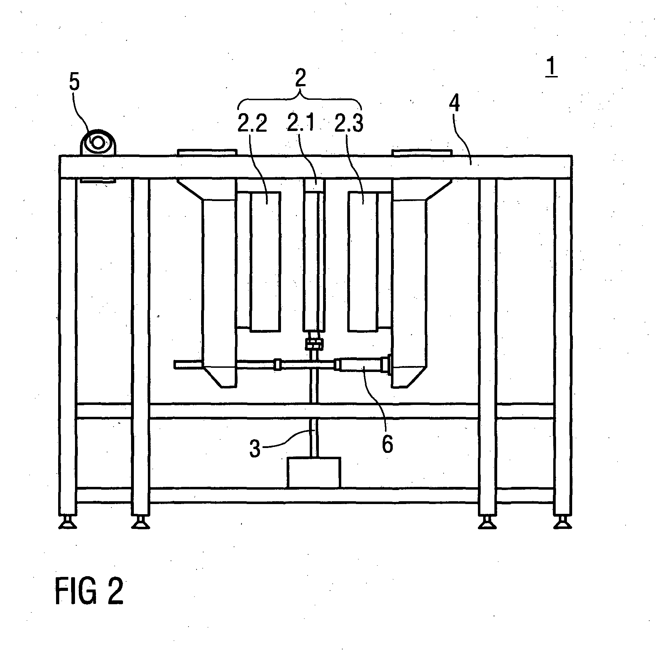

Figur 2 zeigt eine schematische Seitenansicht einer Vorrichtung 1 zur Herstellung von Formteilen. Die Vorrichtung 1 umfasst ein Formwerkzeug 2 mit mindestens zwei Kavitäten, die mit aus einem thermoplastischen Material gebildeten Schaumpartikeln füllbar sind. Die gefüllten Kavitäten sind mit unter Druck stehendem heißen Wasserdampf beaufschlagbar, um eine Expansion der Schaumpartikel zu bewirken, die Schaumpartikel zu erweichen und miteinander thermoplastisch zu verschweißen und eine thermoplastische Oberfläche des jeweils aus den verschweißten Schaumpartikel gebildeten Formteils an einer Wandung der Kavität auszubilden. Zur Zuführung von Dampf ist mindestens eine Dampfzuleitung 3 zum Formwerkzeug 2 vorgesehen. Das Formwerkzeug 2 umfasst ein feststehendes Mittelteil 2.1, das zwischen zwei in Richtung des Mittelteils 2.1 zwischen einem offenen und einem geschlossenen Zustand beweglichen Seitenteilen 2.2, 2.3 angeordnet ist, so dass bei geschlossenem Zustand die Kavitäten zwischen jeweils einem der Seitenteile 2.2, 2.3 und dem Mittelteil 2.1 ausgebildet sind. Das Formwerkzeug 2 ist in Figur 2 im offenen Zustand dargestellt.

Die Dampfzuleitung 3 ist ausschließlich am Mittelteil 2.1 angeschlossen. Die Seitenteile 2.2, 2.3 weisen keine eigenen Dampfzuleitungen auf. Stattdessen erfolgt eine Verteilung des Dampfes vom Mittelteil 2.1 aus.

Die Seitenteile 2.2, 2.3 sind bezüglich des Mittelteils 2.1 synchron bewegbar. Das Formwerkzeug ist in einem Rahmen 4 angeordnet.

Es sind ein elektrischer Antrieb 5 und ein hydraulischer Antrieb 6 vorgesehen. Die Seitenteile 2.2, 2.3 werden einen überwiegenden Teil einer Wegstrecke vom geöffneten Zustand zum geschlossenen Zustand mittels des elektrischen Antriebs 5 und eine geringe restliche Wegstrecke mittels des hydraulischen Antriebs 6 bewegt.

Die Seitenteile 2.2, 2.3 sind in Rollschienen aufgehängt und geführt.

Die Kavitäten werden über ein Ventil (nicht gezeigt) und die Dampfzuleitung 3 zeitgesteuert so mit dem Wasserdampf beaufschlagt, dass der Wasserdampf als weitgehend unkondensierter, trockener Wasserdampf innerhalb einer kurzen Bedampfungszeit eine Mehrzahl der Schaumpartikel erreicht, bevor die thermoplastische Oberfläche der Formteile sich ausbildet. Den Schaumpartikel wird aus dem Wasserdampf Energie so schnell zugeführt, dass die Schaumpartikel zuerst oberflächlich thermoplastisch werden und anschließend expandieren. Das Ventil ist so in der Nähe des Formwerkzeuges 2 angeordnet, dass eine Kondensation des Dampfes zwischen dem Ventil und dem Formwerkzeug 2 minimiert ist.

Die Verteilung des Dampfes erfolgt über Dampfkanäle innerhalb des Mittelteils 2.1 und der Seitenteile 2.2, 2.3 so, dass Dampf im geschlossenem Zustand des Formwerkzeuges 2 vom Mittelteil 2.1 aus in die Dampfkanäle der Seitenteile 2.2, 2.3 und von dort aus in die jeweilige Kavität strömbar ist.

Die Kavitäten können zur Herstellung gleichartiger oder verschiedenartiger Formteile ausgebildet sein, das heißt es können gleichzeitig zwei gleiche oder zwei unterschiedliche Formteile hergestellt werden.

Zur Herstellung eines Formteils werden die Seitenteile 2.2, 2.3 aus dem offenen Zustand in den geschlossenen Zustand bewegt und die Kavitäten des Formwerkzeuges 2 mit aus einem thermoplastischen Material gebildeten Schaumpartikeln gefüllt. Die gefüllten Kavitäten werden mit unter Druck stehendem heißen Wasserdampf beaufschlagt, um eine Expansion der Schaumpartikel zu bewirken, eine Thermoplastizität einer Oberfläche der Schaumpartikel zu bewirken, die Schaumpartikel durch Expansionsdruck miteinander thermoplastisch zu verschweißen sowie eine thermoplastische Oberfläche des aus den verschweißten Schaumpartikeln gebildeten Formteils an einer Wandung der Kavität auszubilden.

Die Dampfzuleitung 3 ist kürzer als 500 mm.

Die Zuführung des Dampfs erfolgt vorzugsweise ungeregelt über einen kurzen Bedampfungszeitraum.

Die Zuführung des Dampfes erfolgt insbesondere so kurzzeitig, dass das thermoplastische Material der Schaumpartikel nicht durch Überhitzung zerstört wird.

Vorzugsweise werden Schaumpartikel aus expandierbarem Polystyrol (EPS) und/oder aus expandierbarem Polypropylen (EPP) und/oder aus expandierbarem Polyethylen (EPE) und/oder aus einem anderen expandierbaren Polyolefin verwendet. Weiter können Schaumpartikel aus mindestens einem bioplastischen Material, insbesondere Stärke, Maisstärke oder anderen nachwachsenden Rohstoffen oder thermoelastisch beschichtete Materialien sowie Gemische der vorgenannten Stoffe verwendet werden.

Der für die Bedampfung verwendete Maximaldruck liegt vorzugsweise in einem Bereich von 5 bar bis 10 bar, insbesondere bei etwa 7 bar und entspricht dem ungeregelten Vordruck aus einer Vorrichtung für die Erzeugung des Dampfes.

Die Bedampfungszeit liegt vorzugsweise zwischen 0,2 s und 3 s, insbesondere bei etwa 1,5 s.

Die Schaumpartikel werden bevorzugt mehrmals von verschiedenen Seiten bedampft (Querbedampfung).

Vorzugsweise werden die Kavitäten und/oder die zur Bedampfung vorgesehenen Dampfzuleitungen mittels Druckluft gespült, um Kondensat zu entfernen.

Das Einbringen der Schaumpartikel in die Kavität erfolgt vorzugsweise mittels Einblasen, insbesondere unter Druck so, dass die Schaumpartikel komprimiert werden. Ebenso können die Schaumpartikel eingeschüttet werden.

Das Formwerkzeug 2 und/oder die Dampfzuleitung 3 kann/können mit einer Wärmeisolierung versehen sein.

Das Formwerkzeug 2 wird nach der Bedampfung bevorzugt mit Wasser gekühlt.

Nach der Bedampfung kann eine Kühlung des Formteils mit Vakuum durchgeführt werden. Dabei wird noch vorhandenes Kondensat verdunstet und dessen Verdunstungskälte zum Kühlen des Formwerkzeuges 2 genutzt.

### BEZUGSZEICHENLISTE

- 1: Vorrichtung zur Herstellung von Formteilen
- 2: Formwerkzeug
- 2.1: Mittelteil
- 2.2: Seitenteil
- 2.3: Seitenteil
- 3: Dampfzuleitung
- 4: Rahmen
- 5: elektrischer Antrieb
- 6: hydraulischer Antrieb
- Bh1: Enthalpiebereich
- Bh2: Enthalpiebereich
- Bp1: Druckbereich EPS
- Bp2: Druckbereich EPP Autoklavmaterial
- Bp3: Druckbereich Extrusionsmaterial
- h: Enthalpie
- p: Druck
- s: Entropie
- SDL: Sattdampflinie
- T: Temperatur
- v: spezifisches Volumen
- x: Anteil Dampf

## Patentansprüche

1. Vorrichtung (1) zur Herstellung von Formteilen, umfassend ein Formwerkzeug (2) mit mindestens zwei Kavitäten, die mit aus einem thermoplastischen Material gebildeten Schaumpartikel füllbar sind, wobei die gefüllten Kavitäten mit unter Druck stehendem heißen Wasserdampf beaufschlagbar sind, um eine Expansion der Schaumpartikel zu bewirken, die Schaumpartikel zu erweichen und miteinander thermoplastisch zu verschweißen und eine thermoplastische Oberfläche des jeweils aus den verschweißten Schaumpartikeln gebildeten Formteils an einer Wandung der Kavität auszubilden, wobei mindestens eine Dampfzuleitung (3) zum Formwerkzeug (2) vorgesehen ist,
wobei das Formwerkzeug (2) ein feststehendes Mittelteil (2.1) umfasst, das zwischen zwei in Richtung des Mittelteils (2.1) zwischen einem offenen und einem geschlossenen Zustand beweglichen Seitenteilen (2.2, 2.3) angeordnet ist, so dass bei geschlossenem Zustand die Kavitäten zwischen jeweils einem der Seitenteile (2.2, 2.3) und dem Mittelteil (2.1) ausgebildet sind, wobei das Formwerkzeug (2) so ausgebildet ist, dass die Schaumpartikel von verschiedenen Seiten bedampfbar sind,
**dadurch gekennzeichnet, dass** die Dampfzuleitung (3) ausschließlich am Mittelteil angeschlossen ist, wobei mehrere Ventile sowie Dampfkanäle innerhalb des Mittelteils (2.1) und der Seitenteile (2.2, 2.3) so vorgesehen sind, dass Dampf im geschlossenem Zustand vom Mittelteil (2.1) aus in die Dampfkanäle der Seitenteile (2.2, 2.3) und von dort aus in die jeweilige Kavität strömbar ist.

2. Vorrichtung (1) nach Anspruch 1,
**dadurch gekennzeichnet, dass** die Seitenteile (2.2, 2.3) bezüglich des Mittelteils synchron bewegbar sind.

3. Vorrichtung (1) nach einem der vorhergehenden Ansprüche,
**dadurch gekennzeichnet, dass** ein elektrischer Antrieb (5) und/oder ein hydraulischer Antrieb (6) zum Bewegen der Seitenteile (2.2, 2.3) vorgesehen sind/ist.

4. Vorrichtung (1) nach Anspruch 3,
**dadurch gekennzeichnet, dass** die Seitenteile (2.2, 2.3) einen überwiegenden Teil einer Wegstrecke vom geöffneten Zustand zum geschlossenen Zustand schnell und mit geringer Kraft mittels des elektrischen Antriebs (5) bewegbar sind, wobei die Seitenteile (2.2, 2.3) eine geringe restliche Wegstrecke mittels des hydraulischen Antriebs (6) mit hoher Kraft bewegbar sind, um das Formwerkzeug (2) gegen den Druck des Dampfes geschlossen und dicht zu halten, wobei die Seitenteile (2.2, 2.3) beim Öffnen des Formwerkzeuges (2) eine geringe Strecke mit dem hydraulischen Antrieb (6) fahrbar sind, um Verklebungen des Formteils mit der Wandung der Kavität zu lösen, wobei die Seitenteile (2.2, 2.3) anschließend den verbleibenden größeren Teil der Strecke mittels des elektrischen Antriebs und geringer Kraft bewegt werden.

5. Vorrichtung (1) nach einem der vorhergehenden Ansprüche,
**dadurch gekennzeichnet, dass** die Dampfzuleitung (3) als ein starres, gelenkfreies Rohr ausgebildet ist.

6. Vorrichtung (1) nach einem der vorhergehenden Ansprüche,
**dadurch gekennzeichnet, dass** die Seitenteile (2.2, 2.3) auf Rollschienen geführt sind.

7. Vorrichtung (1) nach einem der vorhergehenden Ansprüche,
**dadurch gekennzeichnet, dass** die Kavität über ein Ventil und die Dampfzuleitung (3) zeitgesteuert so mit dem Wasserdampf beaufschlagbar ist, dass der Wasserdampf als weitgehend unkondensierter, trockener Wasserdampf innerhalb einer kurzen Bedampfungszeit eine Mehrzahl der Schaumpartikel erreicht, bevor die thermoplastische Oberfläche des Formteils sich ausbildet, wobei den Schaumpartikel aus dem Wasserdampf Energie so schnell zuführbar ist, dass die Schaumpartikel zuerst oberflächlich thermoplastisch werden und anschließend expandieren, wobei eine Zuleitung zwischen dem Ventil und der Kavität kürzer als 500 mm ist, so dass eine Kondensation des Dampfes zwischen dem Ventil und dem Formwerkzeug (2) minimiert ist.

## Claims

1. Device (1) for producing moulded parts, comprising a moulding tool (2) having at least two cavities that are fillable with foam particles formed from a thermoplastic material, wherein pressurized hot steam can be applied to the filled cavities in order to bring about expansion of the foam particles, soften the foam particles and thermoplastically fuse the particles together, and in order to form a thermoplastic surface of the moulded part respectively formed from the fused foam particles on a wall of the cavity, wherein at least one steam supply line (3) to the moulding tool (2) is provided, wherein the moulding tool (2) comprises a fixed central part (2.1), which is arranged between two side parts (2.2, 2.3) that are movable in the direction of the central part (2.1) between an open state and a closed state, so that, in the closed state, the cavities are respectively formed between one of the side parts (2.2, 2.3) and the central part (2.1), wherein the moulding tool (2) is formed in such a way that the foam particles can be subjected to steam from different sides, **characterized in that** the steam supply line (3) is connected exclusively to the central part, wherein multiple valves and steam channels are provided within the central part (2.1) and the side parts (2.2, 2.3) in such a way that, in the closed state, steam is able to flow from the central part (2.1) into the steam channels of the side parts (2.2, 2.3) and from there into the respective cavity.

2. Device (1) according to Claim 1,
**characterized in that** the side parts (2.2, 2.3) are movable synchronously with respect to the central part.

3. Device (1) according to one of the preceding claims,
**characterized in that** an electric drive (5) and/or a hydraulic drive (6) is/are provided for moving the side parts (2.2, 2.3).

4. Device (1) according to Claim 3,
**characterized in that** the side parts (2.2, 2.3) are movable quickly and with little force by means of the electric drive (5) over a predominant part of a distance from the open state to the closed state, wherein the side parts (2.2, 2.3) are movable with great force by means of the hydraulic drive (6) over a small remaining distance in order to keep the moulding tool (2) closed and sealed against the pressure of the steam, wherein the side parts (2.2, 2.3) are movable over a small distance by the hydraulic drive (6) during the opening of the moulding tool (2) in order to release places where the moulded part is adhering to the wall of the cavity, wherein the side parts (2.2, 2.3) are subsequently moved over the remaining greater part of the distance by means of the electric drive and with little force.

5. Device (1) according to one of the preceding claims,
**characterized in that** the steam supply line (3) is formed as a rigid, joint-free pipe.

6. Device (1) according to one of the preceding claims,
**characterized in that** the side parts (2.2, 2.3) are guided on rolling rails.

7. Device (1) according to one of the preceding claims,
**characterized in that** water vapour can be applied to the cavity via a valve and the steam supply line (3) in a time-controlled manner in such a way that the water vapour reaches a plurality of the foam particles as largely uncondensed, dry water vapour within a short steam-application time before the thermoplastic surface of the moulded part forms, wherein energy can be supplied to the foam particles from the water vapour so quickly that the foam particles first become superficially thermoplastic and subsequently expand, wherein a supply line between the valve and the cavity is shorter than 500 mm, so that condensation of the steam between the valve and the moulding tool (2) is minimized.

## Revendications

1. Dispositif (1) pour la fabrication de pièces moulées, comprenant un outil de moulage (2) avec au moins deux cavités, qui peuvent être remplies avec des particules de mousse formées par un matériau thermoplastique, dans lequel les cavités remplies sont exposées à de la vapeur d'eau chaude se trouvant sous pression, afin de provoquer une expansion des particules de mousse, de ramollir les particules de mousse et de les souder de façon thermoplastique les unes aux autres et de former ainsi sur une paroi de la cavité une surface thermoplastique de la pièce moulée respectivement formée par les particules de mousse soudées, dans lequel il est prévu au moins une conduite d'arrivée de vapeur (3) à l'outil de moulage (2), dans lequel l'outil de moulage (2) comprend une partie centrale immobile (2.1), qui est disposée entre deux parties latérales (2.2, 2.3) mobiles en direction de la partie centrale (2.1) entre un état ouvert et un état fermé, de telle manière que, dans l'état fermé, les cavités soient formées respectivement entre une des parties latérales (2.2, 2.3) et la partie centrale (2.1), dans lequel l'outil de moulage (2) est configuré de telle manière que les particules de mousse puissent être exposées à la vapeur sur différents côtés,
**caractérisé en ce que** la conduite d'arrivée de vapeur (3) est raccordée exclusivement à la partie centrale (2.1), dans lequel il est prévu plusieurs soupapes ainsi que plusieurs canaux de vapeur à l'intérieur de la partie centrale (2.1) et des parties latérales (2.2, 2.3), de telle manière que la vapeur puisse, à l'état fermé, s'écouler de la partie centrale (2.1) dans les canaux de vapeur des parties latérales (2.2, 2.3) et de là dans la cavité respective.

2. Dispositif (1) selon la revendication 1, **caractérisé en ce que** les parties latérales (2.2, 2.3) sont mobiles de façon synchrone par rapport à la partie centrale.

3. Dispositif (1) selon l'une quelconque des revendications précédentes, **caractérisé en ce qu'**il est prévu un entraînement électrique (5) et/ou un entraînement hydraulique (6) pour le déplacement des parties latérales (2.2, 2.3).

4. Dispositif (1) selon la revendication 3, **caractérisé en ce que** les parties latérales (2.2, 2.3) sont déplaçables sur une majeure partie d'un trajet de l'état ouvert à l'état fermé rapidement et avec une faible force au moyen de l'entraînement électrique (5), dans lequel les parties latérales (2.2, 2.3) sont déplaçables sur un petit trajet résiduel avec une force élevée au moyen de l'entraînement hydraulique (6), afin de garder l'outil de moulage (2) fermé et étanche contre la pression de la vapeur, dans lequel les parties latérales (2.2, 2.3) sont déplaçables sur un petit trajet avec l'entraînement hydraulique (6) lors de l'ouverture de l'outil de moulage (2), afin de détacher les collages de la pièce moulée sur la paroi de la cavité, dans lequel les parties latérales (2.2, 2.3) sont ensuite déplacées sur la plus grande partie restante du trajet au moyen de l'entraînement électrique et avec une faible force.

5. Dispositif (1) selon l'une quelconque des revendications précédentes, **caractérisé en ce que** la conduite d'arrivée de vapeur (3) se présente sous la forme d'un tube rigide sans articulation.

6. Dispositif (1) selon l'une quelconque des revendications précédentes, **caractérisé en ce que** les parties latérales (2.2, 2.3) sont guidées sur des rails de roulement.

7. Dispositif (1) selon l'une quelconque des revendications précédentes, **caractérisé en ce que** la cavité peut être exposée à la vapeur d'eau via une soupape et la conduite d'arrivée de vapeur (3) par une commande temporelle, de telle manière que la vapeur d'eau, sous forme de vapeur d'eau sèche largement non condensée, atteigne en un court laps de temps de vaporisation, une multiplicité des particules de mousse, avant que la surface thermoplastique de la pièce moulée se forme, dans lequel de l'énergie peut être transmise aux particules de mousse par la vapeur d'eau tellement rapidement que les particules de mousse deviennent d'abord thermoplastiques en surface et ensuite se dilatent, dans lequel une conduite d'arrivée entre la soupape et la cavité est plus courte que 500 mm, de telle manière qu'une condensation de la vapeur entre la soupape et l'outil de moulage (2) soit minimisée.
